# EUROPÄISCHE PATENTSCHRIFT

(11) **EP 2 940 374 B1**
(45) Veröffentlichungstag und Bekanntmachung des Hinweises auf die Patenterteilung: **25.04.2018**
(21) Anmeldenummer: 15165209.6
(22) Anmeldetag: 27.04.2015
(51) Int. Cl.: F21S 8/04, F21V 5/00

(54) **OPTISCHES ELEMENT FÜR EINE LICHTQUELLE EINER LEUCHTE, SOWIE LEUCHTE**
OPTICAL ELEMENT FOR A LIGHT SOURCE OF A LAMP, AND LAMP
ÉLÉMENT OPTIQUE POUR UNE SOURCE LUMINEUSE D'UN ÉCLAIRAGE, ET ÉCLAIRAGE

(30) Priorität: 30.04.2014 DE 202014102021 U
(43) Veröffentlichungstag der Anmeldung: 04.11.2015
(73) Patentinhaber: Zumtobel Lighting GmbH, 6850 Dornbirn (AT)
(72) Erfinder: Machate, Andreas, 88239 Wangen im Allgäu (DE)
(74) Vertreter: Thun, Clemens

(56) Entgegenhaltungen:
- EP-A1- 2 541 298
- EP-A2- 1 744 096
- EP-A2- 2 518 396
- WO-A1-2013/008221
- US-A1- 2004 208 019
- US-A1- 2012 250 346
- US-A1- 2013 335 966
- US-A1- 2014 104 868

## Beschreibung

Die Erfindung betrifft eine Leuchte mit einem optischen Element für eine Lichtquelle der Leuchte, wobei das optische Element einen lichtleitenden Bereich mit einer Lichteintrittsfläche für ein von der Lichtquelle abgestrahltes Licht aufweist.

Aus dem Stand der Technik ist ein länglicher Lichtleiter bekannt, der an einem der beiden stirnseitigen Endbereiche eine Lichteintrittsfläche aufweist. Das eingestrahlte Licht wird innerhalb des Lichtleiters über interne Totalreflexionen an den Längsseiten weitergeleitet und an dem gegenüberliegenden stirnseitigen Endbereich über eine Lichtaustrittsfläche wieder abgegeben.

Die Lichtaustrittsfläche ist dabei vergleichsweise klein, so dass bei entsprechend intensivem Licht grundsätzlich eine Blendungsgefahr gegeben ist. Außerdem erfolgt die Lichtabgabe in einen vergleichsweise kleinen Raumwinkelbereich. Aufgrund dieser Eigenschaften eignet sich der Lichtleiter wenig dazu, bei einer Leuchte verwendet zu werden, insbesondere nicht bei einer Deckenleuchte.

Aus der US 2014/0104868 A1 ist eine Deckenleuchte mit einer LED-Lichtquelle und einem optischen Element bekannt, das einen lichtleitenden Bereich und einen sich daran anschließenden linsenartigen Bereich aufweist, über den ein Teil des Lichts seitlich abgegeben wird. Ein weiterer Teil des Lichts wird in Vorwärtsrichtung abgegeben. Um das optische Element herum erstreckt sich ein Reflektor.

Aus der EP 2 541 298 A1 ist ein optisches Element für eine LED-Lichtquelle bekannt, das einen säulenartigen Basisbereich aufweist, an den sich ein nach außen gebogener Bereich anschließt. Am Übergang zwischen den beiden Bereichen ist eine plane Lichtaustrittsfläche gebildet.

Aus der US 2013/0335966 A1 ist eine Leuchte mit einer LED-Lichtquelle und einem Lichtleitelement bekannt, das einen nach außen gewölbten Bereich aufweist.

Aus der EP 1 744 096 A2 ist eine Leuchte mit einem Lichtleitelement bekannt, das einen Bauchabschnitt aufweist, an den sich ein Seitenablenkungsbereich anschließt. Um das Lichtleitelement herum erstreckt sich ein Reflektor.

Der Erfindung liegt die Aufgabe zugrunde, eine entsprechende Leuchte anzugeben; insbesondere soll eine Lichtabgabe erzielbar sein, die zum einen, beispielsweise zur Erzeugung einer direkten Beleuchtung, Licht in eine Vorwärtsrichtung abgibt und zum anderen, beispielsweise zur Erzeugung einer indirekten Beleuchtung, Licht ein einen seitlichen Bereich.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchte vorgesehen, die eine Lichtquelle, insbesondere eine LED-Lichtquelle aufweist (LED: Licht emittierende Diode) und ein optisches Element für die Lichtquelle. Das optische Element weist einen lichtleitenden Bereich mit einer Lichteintrittsfläche für ein von der Lichtquelle abgestrahltes Licht auf, sowie einen, sich an den lichtleitenden Bereich anschließenden Linsenbereich mit einer ersten Lichtaustrittsfläche zur Abgabe eines ersten Teils des Lichts in eine Vorwärtsrichtung sowie einen, sich an den Linsenbereich anschließenden gekrümmten Bereich mit einer zweiten Lichtaustrittsfläche zur Abgabe eines zweiten Teils des Lichts in eine seitliche Richtung. Das optische Element ist dabei derart angeordnet, dass ein von der Lichtquelle abgestrahltes Licht über die Lichteintrittsfläche in das optische Element eingestrahlt wird.

Mit dieser Leuchte lässt sich besonders geeignet eine Lichtabgabe nach vorne, beispielsweise zur Erzeugung einer Direktbeleuchtung und zur Seite, beispielsweise zur Erzeugung einer indirekten Beleuchtung erzielen.

Erfindungsgemäß ist die Leuchte in Form einer Deckenleuchte, insbesondere eines Downlights, gegeben, wobei sie weiterhin eine Blende aufweist, die normal zu der Vorwärtsrichtung den lichtleitenden Bereich umgebend angeordnet ist. Durch die Blende lässt sich praktisch verhindern, dass ein Nutzer ungewollt direkt in die Lichtquelle blickt und so geblendet wird.

Erfindungsgemäß ist hierzu die Leuchte derart gestaltet, dass die Blende unmittelbar an den lichtleitenden Bereich angrenzend ausgebildet ist und außerdem unmittelbar an den gekrümmten Bereich.

Vorzugsweise ist dabei die Blende mechanisch mit dem optischen Element verbunden, beispielsweise über eine Bajonett- oder Schraubverbindung. Hierdurch ist eine besonders geeignete Befestigung ermöglicht.

Durch die Gestaltung des optischen Elements lässt sich besonders geeignet über den Linsenbereich Licht nach vorne abgeben und über den gekrümmten Bereich Licht zur Seite. Diese Lichtverteilung lässt sich dabei mit lediglich einem optischen Element bewirken.

Vorzugsweise ist der lichtleitende Bereich zumindest im Wesentlichen entlang der Vorwärtsrichtung stabförmig oder plattenförmig gestaltet. Hierdurch lässt sich geeignet eine effektive Lichtleitung mittels interner Totalreflexion bewirken.

Vorzugsweise ist der gekrümmte Bereich derart geformt, dass er sich auf zwei gegenüberliegenden Seiten des Linsenbereichs erstreckt, insbesondere allseits um den Linsenbereich herum erstreckt. Hierdurch lässt sich eine Lichtabgabe in zwei gegenüberliegende seitliche Richtungen bewirken bzw. in alle seitlichen Richtungen.

Vorzugsweise ist der gekrümmte Bereich derart geformt, dass er sich in Vorwärtsrichtung über die erste Lichtaustrittsfläche hinaus erstreckt, insbesondere die erste Lichtaustrittsfläche allseits umgebend. Hierdurch lässt sich erzielen, dass ein Benutzer lediglich aus einem sehr kleinen Raumwinkelbereich auf die erste Lichtaustrittsfläche blicken kann; hierdurch ist insbesondere eine potenzielle Blendungsgefahr vermindert.

Vorzugsweise weist der gekrümmte Bereich einen Randbereich auf, der insbesondere geschlossen ringförmig in einer Ebene verläuft, insbesondere in einer zu der Vorwärtsrichtung normal orientierten Ebene. Hierdurch lässt sich das optische Element mit dem Randbereich gegen eine Deckenfläche oder Wandfläche anliegend anordnen, wodurch sich ein geschützter Innenbereich bilden lässt. Dies ist beispielsweise vorteilhaft, wenn das optische Element bei einer Deckenleuchte verwendet wird.

Vorzugsweise erstreckt sich der lichtleitende Bereich weiter in eine, der Vorwärtsrichtung entgegengesetzte Rückwärtsrichtung als der gekrümmte Bereich. Hierdurch lässt sich besonders geeignet erzielen, dass die Lichteintrittsfläche verdeckt werden kann, wodurch ein weitergehender Schutz vor einer ungewollten Blendung erzielbar ist.

Vorzugsweise weist die zweite Lichtaustrittsfläche eine Wölbung auf, die derart gestaltet ist, dass ein Teil des Lichts, der von innen kommend auf die zweite Lichtaustrittsfläche trifft, aufgrund der Wölbung keine interne Totalreflexion erfährt, sondern die zweite Lichtaustrittsfläche durchsetzt und so in einen Außenraum gelangt. Hierdurch lässt sich die Richtungsverteilung des zweiten Teils des Lichts besonders gezielt festlegen. Auf diese Weise kann die Wahrscheinlichkeit, dass Licht in einem ungünstigen Winkel in das Auge eines Nutzers gelangt - und somit die potenzielle Blendungsgefahr - weitergehend verringert werden.

Vorzugsweise weist der gekrümmte Bereich zur Abgabe des zweiten Teils des Lichts in die seitliche Richtung eine strukturierte Oberfläche auf. Hierdurch lässt sich geeignet eine Lichtabgabe zur Seite erzielen.

Vorzugsweise ist die erste Lichtaustrittsfläche in erster Näherung plan und dabei insbesondere normal zu der Vorwärtsrichtung orientiert ausgestaltet. Dies ist vorteilhaft mit Bezug auf die Lichtabgabe nach vorne.

Vorzugsweise weist die erste Lichtaustrittsfläche eine strukturierte Oberfläche zur Lenkung des ersten Teils des Lichts auf, beispielsweise in Form von Mikroprismen. Hierdurch lässt sich die Lichtverteilung nach vorne besonders gezielt gestalten.

Besonders geeignet kann das optische Element aus einem transparenter Kunststoff bestehen, beispielsweise aus PMMA (Polymethylmethacrylat) oder PC (Polycarbonat).

Die Erfindung wird im Folgenden anhand von Ausführungsbeispielen und mit Bezug auf die Zeichnungen näher erläutert. Es zeigen:
- Fig. 1: eine Skizze einer seitlichen Ansicht einer erfindungsgemäßen Leuchte,
- Fig.2: eine Skizze eines Querschnitts durch die Leuchte,
- Fig. 3: einen perspektivischen Querschnitt,
- Fig. 4: eine Explosionsdarstellung der Leuchte und
- Fig. 5: eine Skizze einer Variation des optischen Elements.

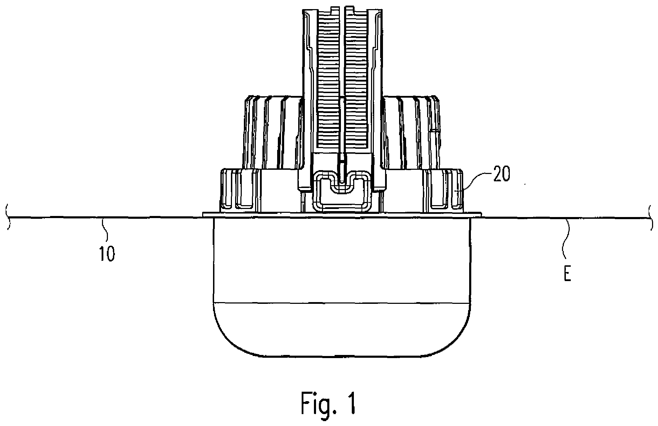

In Fig. 1 ist eine seitliche Ansicht eines Ausführungsbeispiels einer erfindungsgemäßen Leuchte skizziert. Bei der Leuchte handelt es sich vorzugsweise um eine Deckenleuchte, insbesondere um eine Deckeneinbauleuchte, die zum Einbau ein eine Einbauöffnung einer - in Fig. 1 lediglich angedeuteten - Decke 10 vorgesehen ist. Beim hier gezeigten Beispiel wird davon ausgegangen, dass die Decke 10 um die Einbauöffnung herum eine nach unten weisende Deckenfläche aufweist, durch die eine Ebene *E* festgelegt ist. Bei dieser Beschreibung wird davon ausgegangen, dass die Ebene *E* horizontal orientiert und die Leuchte dementsprechend ausgerichtet ist. Im Allgemeinen kann die Ebene bzw. die Leuchte jedoch auch eine andere Orientierung haben. In diesem Fall sind die vorliegenden Richtungsbezeichnungen etc. entsprechend umzudeuten.

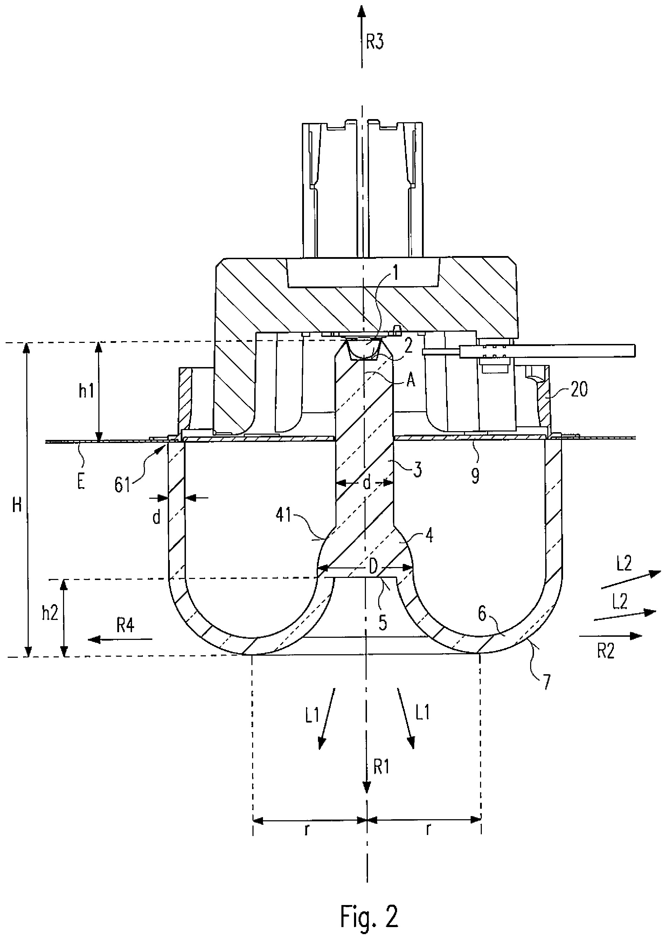

Fig. 2 zeigt eine Skizze eines Querschnitts der Leuchte. Die Leuchte umfasst eine Lichtquelle, hier in Form einer LED-Lichtquelle 1 zur Abstrahlung eines Lichts. Die LED-Lichtquelle 1 kann eine LED oder mehrere LEDs aufweisen, die vorzugsweise auf einer insbesondere horizontal orientieren Platine angeordnet sind.

Zur Beeinflussung des von der LED-Lichtquelle 1 abgestrahlten Lichts weist die Leuchte ein optisches Element auf. Das optische Element ist vorzugsweise aus einem Stück bestehend gebildet; es kann beispielsweise zumindest überwiegend aus einem transparenten Kunststoff bestehen, wie PMMA oder PC.

Das optische Element umfasst einen lichtleitenden Bereich 3 mit einer Lichteintrittsfläche 2 für das Licht. Dementsprechend ist das optische Element derart angeordnet, dass das von der LED-Lichtquelle 1 abgestrahlte Licht über die Lichteintrittsfläche 2 in das optische Element eingestrahlt, sozusagen eingekoppelt wird. Beim gezeigten Beispiel ist die Lichteintrittsfläche 2 durch eine Ausnehmung gebildet; dabei ist die LED-Lichtquelle 1 vorzugsweise so angeordnet, dass sie zumindest teilweise, vorzugsweise zumindest überwiegend in die Ausnehmung eingreifend angeordnet ist. Hierdurch lässt sich erzielen, dass besonders viel des von der LED-Lichtquelle 1 abgestrahlten Lichts in das optische Element eingestrahlt wird, also ein besonders guter Wirkungsgrad.

Vorzugsweise ist der lichtleitende Bereich 3 derart gestaltet, dass das Licht, das über die Lichteintrittsfläche 2 in das Innere des optischen Elements eingetreten ist, durch interne Totalreflexionen an den seitlichen Wandflächen des lichtleitenden Bereichs 3 weitergeleitet wird, hier also nach unten.

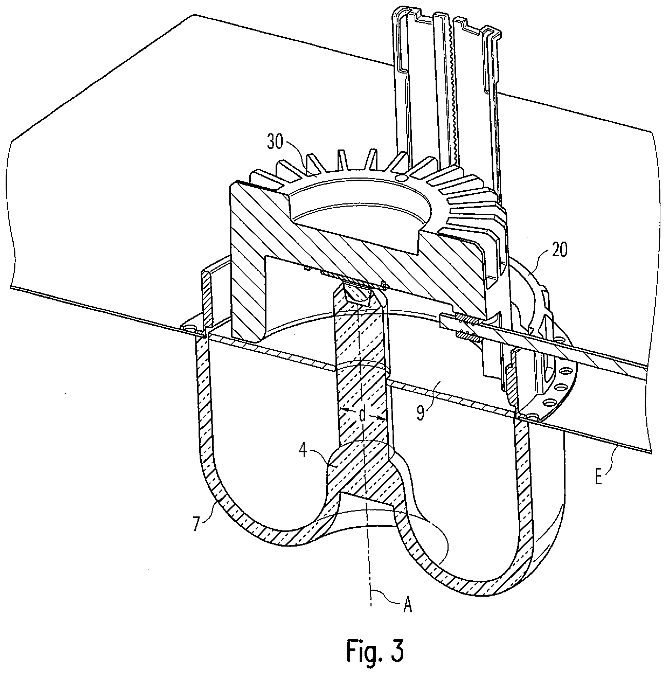

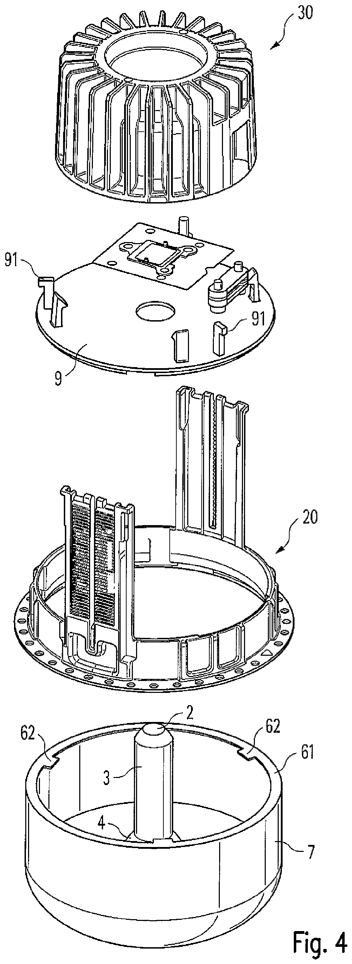

In Fig. 3 ist ein perspektivischer Schnitt durch die Leuchte skizziert und in Fig. 4 eine Explosionsdarstellung der Leuchte. Wie diesen Skizzen zu entnehmen, ist der lichtleitende Bereich 3 bei diesem Ausführungsbeispiel im Wesentlichen stabförmig gestaltet, beispielsweise, wie skizziert, mit einem kreisförmigen Durchmesser *d*. Dabei ist bei der hier betrachteten Orientierung der lichtleitende Bereich 3 vorzugsweise mit seiner durch die Stabform festgelegten Hauptache *A* senkrecht ausgerichtet angeordnet, wobei sich die Lichteintrittsfläche 2 am oberen Endbereich befindet.

Weiterhin umfasst das optische Element einen Linsenbereich 4, der sich an den lichtleitenden Bereich 3 anschließt, insbesondere an dessen unterem Ende bzw. an dem, der Lichteintrittsfläche 2 gegenüberliegenden Endbereich des lichtleitenden Bereichs 3. Beim gezeigten Beispiel weist der Linsenbereich 4 im Vertikalschnitt betrachtet eine gewölbte Außenfläche 41 auf, durch die der Linsenbereich 4 eine optische Linseneigenschaft erhält.

Vorzugsweise weist der Linsenbereich 4 normal zu der Hauptachse *A* betrachtet einen größeren Querschnitt auf, als der lichtleitende Bereich 3. Diese Durchmesser-Zunahme wird im gezeigten Beispiel durch die gewölbte Außenfläche 41 erzielt. Beispielsweise kann vorgesehen sein, dass der mit Bezug auf die Hauptachse *A* normale Durchmesser *d* des lichtleitenden Bereichs 3 kleiner ist als der entsprechende Durchmesser *D* des Linsenbereichs 4, wobei die Gestaltung beispielsweise so gewählt sein kann, dass Folgendes gilt: *2 d ≥D > 1,1 d.*

Der Linsenbereich 4 weist eine erste Lichtaustrittsfläche 5 zur Abgabe eines ersten Teils des Lichts in eine Vorwärtsrichtung *R1* auf. Mit Abgabe in eine Vorwärtsrichtung *R1* sei dabei zum Ausdruck gebracht, dass das betreffende Licht in einem Lichtkegel bzw. einem Raumwinkel um die Vorwärtsrichtung *R1* herum abgegeben wird. Beispielsweise kann die Vorwärtsrichtung *R1*, wie hier gezeigt, durch die senkrecht nach unten weisende Richtung gegeben sein. Der erste Teil des Lichts kann beispielsweise zur Erzeugung einer direkten Beleuchtung eines unterhalb der Leuchte befindlichen Raumbereichs vorgesehen sein.

Die erste Lichtaustrittsfläche 5 ist beim hier gezeigten Beispiel in erster Näherung plan und dabei vorzugsweise normal zu der Vorwärtsrichtung *R1* orientiert ausgestaltet. Die erste Lichtaustrittsfläche 5 befindet sich also am unteren Rand des Linsenbereichs 4 und bildet eine nach unten bzw. in Vorwärtsrichtung *R1* weisende Begrenzungsfläche des Linsenbereichs 4. Vorzugsweise befindet sich die erste Lichtaustrittsfläche 5 senkrecht unterhalb der Lichteintrittsfläche 2.

Zur Lenkung des ersten Teils des Lichts kann die erste Lichtaustrittsfläche 5 eine strukturierte Oberfläche aufweisen, beispielsweise in Form von Mikroprismen. Hierdurch lässt sich die Abgabe des ersten Teils des Lichts besonders geeignet beeinflussen.

Weiterhin weist das optische Element einen gekrümmten Bereich 6 auf, der sich an den Linsenbereich 4 anschließt, insbesondere an dessen unterem Ende, und zwar randseitig an die erste Lichtaustrittsfläche 5 angrenzend. Beim gezeigten Beispiel ist eine unmittelbare Verbindung bzw. ein lichtleitender Übergang zwischen dem Linsenbereich 4 und dem gekrümmten Bereich 6 entlang des nach unten weisenden, äußeren Rands des Linsenelements 4 gebildet. Über diese Verbindung bzw. durch diesen Übergang wird ein Teil des von oben kommenden Lichts an der ersten Lichtaustrittsfläche 5 vorbei in den gekrümmten Bereich 6 geleitet.

Der gekrümmte Bereich 6 weist eine zweite Lichtaustrittsfläche 7 zur Abgabe eines zweiten Teils des Lichts in eine seitliche Richtung *R2* auf. Bei der seitlichen Richtung *R2* kann es sich insbesondere um eine Richtung senkrecht zur Vorwärtsrichtung *R1* handeln. Dementsprechend handelt es sich bei der hier betrachteten Ausrichtung bei der seitlichen Richtung *R2* um eine horizontale Richtung.

Beispielsweise kann vorgesehen sein, dass keiner der Lichtstrahlen *L2* des zweiten Teils des Lichts mit der Vorwärtsrichtung *R1* einen Winkel einschließt, der kleiner als 90° oder kleiner als 80° ist. Hierdurch lässt sich die Blendungsgefahr für einen Nutzer der Leuchte vermindern.

Dabei ist die Gestaltung vorzugsweise so, dass der zweite Teil des Lichts nicht nur in die seitliche Richtung *R2* abgegeben wird, sondern außerdem in wenigstens eine weitere seitliche Richtung *R4*, die insbesondere der zuerst genannten seitlichen Richtung *R2* entgegengesetzt ist. Insbesondere ist vorteilhaft vorgesehen, dass der zweite Teil des Lichts in alle seitlichen Richtungen abgegeben wird, die auf die Vorwärtsrichtung *R1* senkrecht stehen, also bei der hier betrachteten Ausrichtung in alle horizontalen Richtungen.

Der zweite Teil des Lichts kann beispielsweise zur Erzeugung einer indirekten Beleuchtung durch Beleuchtung eines umgebenden Deckenbereichs oder umgebender Wandbereiche vorgesehen sein. Hierzu kann insbesondere vorgesehen sein, dass die Lichtstrahlen *L2* des zweiten Teils des Lichts mit Bezug auf die Vorwärtsrichtung *R1* in einem Winkelbereich bis zu 130° oder bis zu 120° abgegeben werden, also auch leicht nach schräg oben, so dass auf diese Weise vorteilhaft ein umliegender Deckenbereich beleuchtet werden kann.

Wie aus den Figuren 2 und 3 hervorgeht, ist beim gezeigten Beispiel der gekrümmte Bereich 6 bei im Wesentlichen konstanter Wandstärke *d* derart geformt, dass er sich, ausgehend von dem Linsenbereich 4 zunächst allseits in Vorwärtsrichtung *R1* oder leicht schräg hierzu erstreckt, so dass an dieser Stelle eine Lichtweiterleitung durch interne Totalreflexionen erzielt wird. Im Weiteren wölbt sich dann der gekrümmte Bereich 6 mit Bezug auf die erste Lichtaustrittsfläche 5 bzw. die Hauptachse *A* nach außen, insbesondere allseits radial nach außen. In einem gewissen radialen Abstand *r* ist der nach außen gerichtete Verlauf des gekrümmten Bereichs 6 horizontal gerichtet; außerhalb des Abstands *r* erfährt der Verlauf durch weitere Wölbung eine aufwärts gerichtete Komponente, wird zunehmend steiler und erstreckt sich schließlich entgegen der Vorwärtsrichtung *R1* also senkrecht nach oben, so dass er schließlich eine Rohrzylinderform beschreibt, die an einem nach oben weisenden Randbereich 61 endet. Somit ist durch den gekrümmten Bereich 6 insgesamt eine Art Topf-Form gebildet.

Der gekrümmte Bereich 6 ist dementsprechend vorzugsweise so geformt, dass er sich auf wenigstens zwei gegenüberliegenden Seiten des Linsenbereichs 4 erstreckt; an dem Linsenbereich 4 kann also sozusagen eine Art Verzweigung des optischen Elements gebildet sein. Insbesondere jedoch kann vorgesehen sein, dass sich der gekrümmte Bereich 6 wie erwähnt allseits um den Linsenbereich 4 herum erstreckt. Wie beim gezeigten Beispiel der Fall, kann der gekrümmte Bereich 6 dabei rotationssymmetrisch gestaltet sein, wobei die Symmetrieachse mit der Hauptachse *A* des lichtleitenden Bereichs 3 zusammenfällt. Auch das gesamte optische Element kann zumindest in erster Näherung rotationssymmetrisch gestaltet sein.

Der gekrümmte Bereich 6 ist vorzugsweise zum Teil so gestaltet, dass er das Licht, das aus dem Linsenbereich 4 kommend in den gekrümmten Bereich 6 eintritt, weiterleitet, insbesondere durch interne Totalreflexionen an den Wänden. Das Licht wird also innerhalb des gekrümmten Bereichs 6 verteilt.

Der Linsenbereich 4 erfüllt somit mehrere Funktionen: Zum einen wird über ihn der erste Teil des Lichts nach unten abgegeben, zum anderen wird über ihn ein anderer Teil des Lichts in den gekrümmten Bereich 6 weitergeleitet.

Mit der erfindungsgemäßen Leuchte lässt sich so unter Verwendung nur eines entsprechenden optischen Elements sowohl eine indirekte, als auch eine direkte Beleuchtung erzeugen. Dabei kann Licht verwendet werden, das aus lediglich einer Lichtquelle abgestrahlt wird.

Wie beispielsweise aus Fig. 2 ersichtlich, ist der gekrümmte Bereich 6 weiterhin vorzugsweise derart geformt, dass er sich in Vorwärtsrichtung *R1* über die erste Lichtaustrittsfläche 5 hinaus erstreckt, insbesondere die erste Lichtaustrittsfläche 5 allseits umgebend. Beim gezeigten Beispiel weist das optische Element eine Höhe bzw. Erstreckung *H* entlang der Vorwärtsrichtung *R1* auf, wobei für den Überstand *h2* des gekrümmten Bereichs 6 über die erste Lichtaustrittsfläche 5 hinaus beispielsweise vorgesehen sein kann, dass *h2 > 0,1 H* gilt.

Durch diese nach vorne überstehende Formgebung lässt sich die Abgabe des ersten Teils des Lichts über die erste Lichtaustrittsfläche 5 räumlich begrenzen, so dass sich der nach unten abgegebene Lichtkegel seitlich begrenzen lässt. Beispielsweise kann vorgesehen sein, dass keiner der Lichtstrahlen *L1* des ersten Teils des Lichts mit der Vorwärtsrichtung *R1* einen Winkel einschließt, der größer als 60° oder größer als 50° ist. Hierdurch lässt sich die Blendungsgefahr für einen Nutzer der Leuchte vermindern.

### ##C5

Der Randbereich 61 des gekrümmten Bereichs 6 ist vorzugsweise geschlossen ringförmig in einer, beispielsweise mit der Deckenebene identischen Ebene *E* verlaufend gestaltet, wobei diese Ebene E insbesondere zu der Vorwärtsrichtung *R1* normal orientiert ist. Hierdurch lässt sich das optische Element mit dem Randbereich 61 gegen die Deckenfläche anliegend anordnen, so dass sich ein geschützter, insbesondere staubgeschützter Innenbereich bilden lässt.

Durch die beschriebene Formgebung lässt sich erzielen, dass die erste Lichtaustrittsfläche 5 und die zweite Lichtaustrittsfläche 7 derart orientiert sind, dass sie nach unten weisen oder allenfalls zur Seite, nicht jedoch nach oben. Auf diese Weise lässt sich verhindern, dass sich bei Betrieb der Leuchte Staub auf diesen Lichtaustrittsflächen 5, 7 ansammelt.

Allerdings ist die Gestaltung des gekrümmten Bereichs 6 außerdem so, dass der zweite Teil des Lichts über die zweite Lichtaustrittsfläche 7 wie beschrieben abgegeben wird. Beispielsweise kann vorgesehen sein, dass die zweite Lichtaustrittsfläche 7 hierzu eine Wölbung aufweist, die derart gestaltet ist, dass ein Teil des Lichts, der auf die zweite Lichtaustrittsfläche 7 trifft, aufgrund dieser Wölbung keine interne Totalreflexion erfährt, sondern die zweite Lichtaustrittsfläche 7 durchsetzt und so in einen Außenraum des optischen Elements und der Leuchte gelangt. Auf diese Weise lässt sich eine besonders geeignete Lenkung des zweiten Teils des Lichts erzielen. Vorzugsweise ist der Krümmungsradius des gekrümmten Bereichs 6 im Bereich der zweiten Lichtaustrittsfläche 7 hierbei derart gewählt bzw. gestaltet, dass die Auftreffwinkel für die betreffenden Lichtstrahlen etwas größer sind als der entsprechende Totalreflexionswinkel. Mit anderen Worten kann der Krümmungsradius an dieser Stelle etwas kleiner gewählt sein, als der minimale Krümmungsradius für eine interne Totalreflexion.

Durch eine Gestaltung mit einem so gewählten Krümmungsradius lässt sich besonders geeignet erzielen, dass die Lichtstrahlen *L2* des zweiten Teils des Lichts definiert gebrochen und in flachem Winkel an die Decke verteilt werden. So lässt sich praktisch zuverlässig verhindern, das Licht in einem ungünstigen Winkel in das Auge eines Betrachters der Leuchte gelangt.

Alternativ oder zusätzlich hierzu lässt sich die Abgabe bzw. Auskopplung des zweiten Teils des Lichts über die zweite Lichtaustrittsfläche 7 durch andere Auskoppelmechanismen bewirken. Beispielsweise kann hierzu der gekrümmte Bereich 6 an der gewünschten Stelle eine strukturierte Oberfläche aufweisen, insbesondere auf seiner innen liegenden Seite. Eine solche strukturierte Oberfläche kann beispielsweise durch eine prismatische oder linsenartige Struktur gebildet sein. Auch können lichtstreuende Partikel oder Strukturen im Inneren des gekrümmten Bereichs 6 hierzu vorgesehen sein. Weiterhin können hierzu ein Aufdruck oder eine andere Bearbeitung der Oberfläche des gekrümmten Bereichs 6 vorgesehen sein.

Vorzugsweise erstreckt sich der lichtleitende Bereich 3 weiter in eine, der Vorwärtsrichtung *R1* entgegengesetzte Rückwärtsrichtung *R3* als der gekrümmte Bereich 6. Beispielsweise kann vorgesehen sein, dass für den entsprechenden rückwärtigen Überstand *h1* des lichtleitenden Bereichs gegenüber dem gekrümmten Bereich 3 Folgendes gilt: *h2 > 0,1 H* oder *h2 > 0, 2 H.*

Auf diese Weise lässt sich erzielen, dass die Leuchte zum Betrieb so angeordnet werden kann, dass sich die LED-Lichtquelle 1 oberhalb der Ebene *E* befindet. Die Lichtquelle lässt sich somit besonders geeignet "verdecken". Beim gezeigten Beispiel weist die Leuchte hierzu eine insbesondere lichtundurchlässige Blende 9 auf, die normal zu der Vorwärtsrichtung *R1* den lichtleitenden Bereich 3 umgebend angeordnet ist. Vorzugsweise weist die Blende 9 eine nach unten weisende plane Fläche auf, die beispielsweise zumindest im Wesentlichen in der Ebene *E* liegend angeordnet ist.

Dabei ist die Blende 9 vorzugsweise derart gestaltet, dass sie unmittelbar an den lichtleitenden Bereich 3 angrenzend ausgebildet ist und insbesondere außerdem unmittelbar an den gekrümmten Bereich 6. So lässt sich durch die Blende 9 ein, für einen Nutzer bei Normalbetrieb der Leuchte quasi "sichtbarer" Bereich unterhalb der Blende 9 und ein quasi "unsichtbaren" Bereich oberhalb der Blende 9 bilden. Auf diese Weise lässt sich praktisch verhindern, dass ein Nutzer der Leuchte direkt in die Lichtquelle 1 blickt.

Außerdem lässt sich durch die Blende 9 erzielen, dass die um die Einbauöffnung herum gelegene Deckenfläche sozusagen optisch weitergeführt wird; auf diese Weise lässt sich die Leuchte geeignet mit einem besonders unauffälligen und eleganten äußeren Erscheinungsbild gestalten. Vorteilhaft kann hierzu vorgesehen sein, dass die Blende 9 im Farbton und/oder in der Oberflächenbeschaffenheit an die umgebende Deckenfläche angepasst gestaltet ist.

Insbesondere kann die Gestaltung der Leuchte derart sein, dass sich in dem Raum unterhalb der Blende 9 lediglich das optische Element erstreckt, jedoch kein weiteres Bauteil der Leuchte. So lässt sich erzielen, dass bei Betrachtung der Leuchte praktisch nur das optische Element zu sehen ist; insbesondere die Lichtquelle 1 ist hierbei nicht zu sehen.

Wie in Fig. 4 beispielhaft gezeigt, kann die Leuchte beispielsweise unter anderem einen Kühlkörper 30, ein Betriebsgerät und Gehäuseteile etc. umfassen, die alle oberhalb der Ebene *E* angeordnet sind und somit von der Raumseite her durch die Blende 9 verdeckt sind.

Durch diese Gestaltung lässt sich bewirken, dass die Leuchte sozusagen nur als glasartiges Gebilde mit sehr kleiner Öffnung in der Decke wahrgenommen wird; dennoch wird das von der Leuchte abgegebene Licht definiert verteilt abgegeben.

Wie beispielsweise aus der Explosionsdarstellung der Fig. 4 hervorgeht, kann die Leuchte weiterhin einen Halterungsring bzw. Einbauring 20 aufweisen, der zur Halterung der Leuchte in der Einbauöffnung gestaltet ist. Das optische Element kann dabei an dem Einbauring 20 gehalten angeordnet sein. Hierzu kann beispielsweise eine Schraubverbindung, eine Klebeverbindung oder eine Verbindung nach Art einer Bajonettverbindung vorgesehen sein. Im gezeigten Beispiel weist das optische Element hierzu an seinem Randbereich 61 Vorsprünge 62 auf, die zur Herstellung einer Bajonettverbindung bzw. -verriegelung dienen. Die Vorsprünge 62 können dabei, wie in Fig. 4 skizziert, nach innen weisend gestaltet sein oder auch (in den Figuren nicht gezeigt) nach außen weisend, wobei beide Varianten entsprechende Vorteile aufweisen. Denkbar ist auch ein zweiteiliger Aufbau des optischen Elements.

Alternativ oder ergänzend kann das optische Element an die Blende 9 gefügt sein bzw. an der Blende 9 gehalten angeordnet sein, beispielsweise über einen mechanischen Kraftschluss, Kleben Schweißen oder dergleichen. Die Blende 9 kann dabei über Halteelemente, beispielsweise in Form von Schnapphaken 91 und Positionierungsstiften, die an der Oberseite der Blende 9 angeordnet sind, am Einbauring 20 gehalten angeordnet sein.

Vorzugsweise wird der Einbauring 20 zum Einbau der Leuchte bündig mit der Decke verspachtelt und überstrichen oder er wird mit schlichtem Erscheinungsbild gestaltet. Vorzugsweise ist die Gestaltung derart, dass der Einbauring 20 außen zumindest im Wesentlichen bündig mit dem optischen Element abschließt.

Bei der hier beschriebenen Ausführung stellt die Leuchte sozusagen ein Downlight mit einer "herausstehenden Optik" dar.

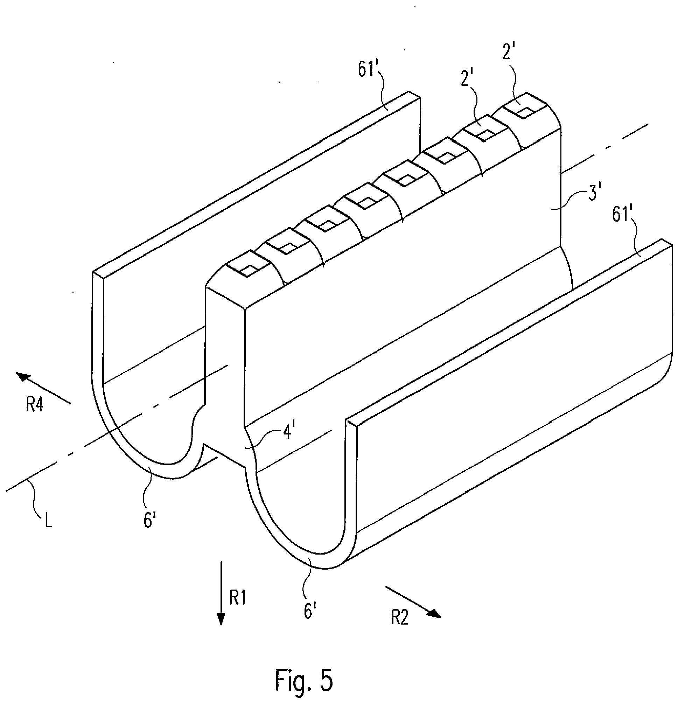

Das beschriebene Konzept lässt sich allerdings nicht nur in Zusammenhang mit einem kreisförmigen bzw. rotationssymmetrischen optischen Element anwenden, sondern beispielsweise auch im Fall einer länglichen Leuchte. Ein entsprechendes optisches Element gemäß einer Variation ist in Fig. 5 skizziert; das optische Element erstreckt sich dabei insgesamt entlang einer Längsachse *L*.

Erkennbar ist hierbei, dass der lichtleitende Bereich, hier mit 3' bezeichnet, mehrere Lichteintrittsflächenbereiche bzw. Lichteinkoppelbereiche 2' bzw. entsprechende Ausnehmungen aufweist, die entsprechend für (hier nicht gezeigte) einzelne LEDs bzw. LED-Lichtquellen vorgesehen sind. Der lichtleitende Bereich 3' ist hier aufgrund der Längserstreckung des optischen Elements nicht stabförmig, sondern in erster Näherung plattenförmig gestaltet. Der Linsenbereich, hier mit 4' bezeichnet, ist dementsprechend ebenfalls länglich gestaltet. Der gekrümmte Bereich, hier mit 6' bezeichnet, erstreckt sich auf lediglich zwei gegenüberliegenden Seiten, und zwar zum einen in die zuerst genannte seitliche Richtung *R2* und in die hierzu entgegengesetzte weitere seitliche Richtung *R4*. Diese beiden seitlichen Richtungen *R2*, *R4* sind hierbei senkrecht zu der Längsachse *L* orientiert.

Bei der in Fig. 5 skizzierten Ausführung können die Lichteinkoppelbereiche 2' derart ausgeführt sein, dass auch eine Entblendung des abgegebene Lichts in Längsrichtung bzw. in Richtung der Längsachse *L* erzielt wird. Sofern eine solche Entblendung nicht erforderlich oder gewünscht ist, können die Lichteinkoppelbereiche 2' alternativ auch - herstellungstechnisch vorteilhaft - durch eine sich entlang der Längsachse *L* erstreckende Profilierung ausgebildet sein. Auf diese Weise lässt sich das gesamte optische Element vorteilhaft als ein Profilteil gestalten; beispielsweise kann es bei dieser Ausführung als extrudiertes Teil gestaltet sein. Bei der in Fig. 5 gezeigten Variante kann das optische Element als Spritzgussteil gestaltet sein.

Die Befestigung des optischen Elements kann wiederum in unterschiedlicher Weise gestaltet sein, also beispielsweise durch ein entsprechendes Verrasten mit einem Leuchtengehäuse bzw. einem Montageelement der Leuchte.

Ansonsten kann die Leuchte in analoger Weise zu der obigen Beschreibung gestaltet sein. Insbesondere kann entsprechend vorgesehen sein, dass das das optische Element mit seinem nach oben weisenden äußeren Randbereich, hier mit 61' bezeichnet, gegen die Deckenfläche anliegt, bzw. sich bis auf Höhe der Ebene *E* erstreckt.

Die längliche Ausgestaltung eignet sich beispielsweise für eine Verwendung in Lichtbändern. Hierfür bietet sich insbesondere die Variante mit vielen einzeln ausgebildeten Lichteinkoppelbereichen 2' an, weil sich hierdurch wie erwähnt besonders geeignet eine entsprechende Längsentblendung erzielen lässt.

Ferner lässt sich das optische Element durch entsprechende Wahl der Länge entlang der Längsachse *L* auch so gestalten, dass es sich für eine Leuchte eignet, die im Horizontalschnitt im Wesentlichen quadratisch geformt ist.

Grundsätzlich eignet sich das optische Element nicht nur für eine Einbauleuchte, wie oben beschrieben, sondern für viele unterschiedliche Arten von Leuchten, beispielsweise für eine Anbauleuchte oder eine abgependelte Leuchte oder eine Feuchtraumleuchte; im letztgenannten Fall lässt sich eine feuchtedichte Abdichtung beispielsweise dadurch erzielen, dass eine Schraubverbindung zwischen dem optischen Element und dem Einbauring 20 vorgesehen ist, über die sich ein geeigneter Druck zur Erzeugung der Dichtungseigenschaft erzeugen lässt. Ferner kann das optische Element auch als aufsteckbare Zusatzoptik verwendet werden.

## Patentansprüche

1. Leuchte in Form einer Deckenleuchte, insbesondere eines Downlights, aufweisend
- eine Lichtquelle, insbesondere eine LED-Lichtquelle (1) und
- ein optisches Element für die Lichtquelle, wobei das optische Element einen lichtleitenden Bereich (3) mit einer Lichteintrittsfläche (2) für ein von der Lichtquelle (1) abgestrahltes Licht aufweist sowie einen, sich an den lichtleitenden Bereich (3) anschließenden Linsenbereich (4) mit einer ersten Lichtaustrittsfläche (5) zur Abgabe eines ersten Teils des Lichts in eine Vorwärtsrichtung (*R1*) und einen, sich an den Linsenbereich (4) anschließenden gekrümmten Bereich (6) mit einer zweiten Lichtaustrittsfläche (7) zur Abgabe eines zweiten Teils des Lichts in eine seitliche Richtung (*R2*),
wobei das optische Element derart angeordnet ist, dass das von der Lichtquelle (1) abgestrahlte Licht über die Lichteintrittsfläche (2) in das optische Element eingestrahlt wird und
- eine Blende (9), die normal zu der Vorwärtsrichtung (*R1*) den lichtleitenden Bereich (3) umgebend angeordnet ist,
wobei die Leuchte derart gestaltet ist, dass die Blende (9) unmittelbar an den lichtleitenden Bereich (3) angrenzend ausgebildet ist,
**dadurch gekennzeichnet,**
**dass** die Blende (9) außerdem unmittelbar an den gekrümmten Bereich (6) angrenzend ausgebildet ist.

2. Leuchte nach Anspruch 1,
bei der die Blende (9) mechanisch mit dem optischen Element verbunden ist, beispielsweise über eine Bajonett- oder Schraubverbindung.

3. Leuchte nach Anspruch 1 oder 2,
bei der der lichtleitende Bereich (3) zumindest im Wesentlichen entlang der Vorwärtsrichtung (*R1*) stabförmig oder plattenförmig gestaltet ist.

4. Leuchte nach einem der vorhergehenden Ansprüche,
bei der der gekrümmte Bereich (6) derart geformt ist, dass er sich auf zwei gegenüberliegenden Seiten des Linsenbereichs (4) erstreckt, vorzugsweise allseits um den Linsenbereich (4) herum erstreckt.

5. Leuchte nach einem der vorhergehenden Ansprüche,
bei der der gekrümmte Bereich (6) derart geformt ist, dass er sich in Vorwärtsrichtung (*R1*) über die erste Lichtaustrittsfläche (5) hinaus erstreckt, insbesondere die erste Lichtaustrittsfläche (5) allseits umgebend.

6. Leuchte nach einem der vorhergehenden Ansprüche,
bei der der gekrümmte Bereich (6) einen Randbereich (61) aufweist, der insbesondere geschlossen ringförmig in einer Ebene (*E*) verläuft, vorzugsweise in einer, zu der Vorwärtsrichtung (*R1*) normal orientierten Ebene (*E*).

7. Leuchte nach einem der vorhergehenden Ansprüche,
bei der sich der lichtleitende Bereich (3) weiter in eine, der Vorwärtsrichtung (*R1*) entgegengesetzte Rückwärtsrichtung (*R3*) erstreckt als der gekrümmte Bereich (6).

8. Leuchte nach einem der vorhergehenden Ansprüche,
bei dem die zweite Lichtaustrittsfläche (7) eine Wölbung aufweist, die derart gestaltet ist, dass ein Teil des Lichts, der von innen kommend auf die zweite Lichtaustrittsfläche (7) trifft, aufgrund der Wölbung keine interne Totalreflexion erfährt, sondern die zweite Lichtaustrittsfläche (7) durchsetzt und so in einen Außenraum gelangt.

9. Leuchte nach einem der vorhergehenden Ansprüche,
bei dem der gekrümmte Bereich (6) zur Abgabe des zweiten Teils des Lichts in die seitliche Richtung (*R2*) eine strukturierte Oberfläche aufweist.

10. Leuchte nach einem der vorhergehenden Ansprüche,
bei der die erste Lichtaustrittsfläche (5) in erster Näherung plan und dabei vorzugsweise normal zu der Vorwärtsrichtung (*R1*) orientiert ausgestaltet ist.

11. Leuchte nach einem der vorhergehenden Ansprüche,
bei der die erste Lichtaustrittsfläche (5) eine strukturierte Oberfläche zur Lenkung des ersten Teils des Lichts aufweist, beispielsweise in Form von Mikroprismen.

12. Leuchte nach einem der vorhergehenden Ansprüche,
bei der das optische Element aus einem transparenten Kunststoff besteht, beispielsweise aus PMMA oder PC.

## Claims

1. Luminaire in the form of a ceiling light, in particular a downlight, comprising
- a light source, in particular an LED light source (1) and
- an optical element for the light source, wherein the optical element comprises a light-conducting region (3) with a light entry surface (2) for a light emitted by the light source (1), as well as lens region (4) adjoining the light-conducting region (3) with a first light exit surface (5) for the emission of a first portion of the light in a forward direction (R1) and a curved region (6) adjoining the lens region (4) with a second light exit surface (7) for the emission of a second portion of the light in a lateral direction (R2),
wherein the optical element is so arranged that the light emitted by the light source (1) light is emitted via the light entry surface (2) in the optical element and
- a screen (9) that is arranged normal to the forward direction (R1) and surrounds the light-conducting region (3),
wherein the luminaire is so designed that the screen (9) is formed directly adjacent to the light-conducting region (3),
**characterized in that**
the screen (9) is also formed directly adjacent to the curved region (6).

2. Luminaire according to claim 1,
wherein the screen (9) is mechanically connected to the optical element, for example via a bayonet or screw connection.

3. Luminaire according to claim 1 or 2,
wherein the light-conducting region (3) is at least substantially in the form of a rod or a plate in the forward direction (R1).

4. Luminaire according to any one of the preceding claims,
wherein the curved region (6) is so shaped that it extends on two opposite sides of the lens region (4), preferably around the lens region (4) on all sides.

5. Luminaire according to one of the preceding claims, wherein the curved region (6) is so shaped that it extends in the forward direction (R1) via the first light exit surface (5), in particular it surrounds the first light exit surface (5) on all sides.

6. Luminaire according to one of the preceding claims,
wherein the curved region (6) comprises an edge region (61), in particular a closed ring shape extending in a plane (E), preferably in a plane (E) normal to the forward direction (R1).

7. Luminaire according to any one of the preceding claims,
wherein the light-conducting region (3) extends further in a backward direction (R3) opposite the forward direction (R1) than the curved region (6).

8. Luminaire according to one of the preceding claims,
wherein the second light exit surface (7) comprises a curvature which is so designed that a portion of the light coming from the inside impinges on the second light exit surface (7) but experiences no internal total reflection due to the curvature, when it then passes through the second light exit surface (7) and into an exterior space.

9. Luminaire according to any one of the preceding claims,
wherein the curved portion (6) for emitting the second portion of the light in the lateral direction (R2) has a structured surface.

10. Luminaire according to one of the preceding claims,
wherein the first light exit surface (5) is planar in a first approximation and thereby preferably oriented normal to the forward direction (R1).

11. Luminaire according to one of the preceding claims,
wherein the first light exit surface (5) has a structured surface, for example in the form of microprisms, to guide the first portion of the light.

12. Luminaire according to one of the preceding claims,
wherein the optical element consists of a transparent plastic, such as PMMA or PC.

## Revendications

1. Luminaire sous la forme d'un plafonnier, plus particulièrement d'un downlight, comprenant
- une source de lumière, plus particulièrement une source de lumière à LED (1) et
- un élément optique pour la source de lumière, l'élément optique comprenant une zone conductrice de lumière (3) avec une surface d'entrée de lumière (2) pour une lumière émise par la source de lumière (1) ainsi qu'une zone à lentilles (4) prolongeant la zone conductrice de lumière (3), avec une première surface de sortie de lumière (5) pour l'émission d'une première partie de la lumière dans une direction vers l'avant (R1) et une zone incurvée (6), prolongeant la zone à lentilles (4), avec une deuxième surface de sortie de lumière (7) pour l'émission d'une deuxième partie de la lumière dans une direction latérale (R2),
l'élément optique étant disposé de façon à ce que la lumière émise par la source de lumière (1) soit introduite dans l'élément optique par l'intermédiaire de la surface d'entrée de lumière (2) et
- un diaphragme (9) qui est disposé perpendiculairement à la direction vers l'avant (R1) de façon à entourer la zone conductrice de lumière (3),
le luminaire étant conçu de façon à ce que le diaphragme (9) soit disposé à proximité immédiate de la zone conductrice de lumière (3),
**caractérisé en ce que**
le diaphragme (9) est disposé en outre à proximité immédiate de la zone incurvée (6).

2. Luminaire selon la revendication 1,
dans lequel le diaphragme (9) est relié mécaniquement avec l'élément optique, par exemple par l'intermédiaire d'une liaison par baïonnette ou par vissage.

3. Luminaire selon la revendication 1 ou 2,
dans lequel la zone conductrice de lumière (3) est conçue en forme de tige ou de plaque globalement le long de la direction vers l'avant (R1).

4. Luminaire selon l'une des revendications précédentes,
dans lequel la zone incurvée (6) est formée de façon à s'étendre sur deux côtés opposés de la zone à lentilles (4), de préférence sur tous les côtés autour de la zone à lentilles (4).

5. Luminaire selon l'une des revendications précédentes,
dans lequel la zone incurvée (6) est formée de façon à s'étendre dans la direction vers l'avant (R1) au-delà de la première surface de sortie de lumière (5), plus particulièrement en entourant la première surface de sortie de lumière (5) de tous les côtés.

6. Luminaire selon l'une des revendications précédentes,
dans lequel la zone incurvée (6) présente un bord (61) qui présente plus particulièrement une forme annulaire fermée dans un plan (E), de préférence dans un plan (E) orienté perpendiculairement à la direction vers l'avant (R1).

7. Luminaire selon l'une des revendications précédentes,
dans lequel la zone conductrice de lumière (3) s'étend plus loin dans une direction vers l'arrière (R3), opposée à la direction vers l'avant (R1) que la zone incurvée (6).

8. Luminaire selon l'une des revendications précédentes,
dans lequel la deuxième surface de sortie de lumière (7) présente une courbure qui est conçue de façon à ce qu'une partie de la lumière qui arrive sur la deuxième surface de sortie de lumière (7) en provenance de l'extérieur ne subisse pas une réflexion totale interne du fait de la courbure mais travers la deuxième surface de sortie de lumière (7) et arrive ainsi dans un espace extérieur.

9. Luminaire selon l'une des revendications précédentes,
dans lequel la zone incurvée (6) présente, pour l'émission de la deuxième partie de la lumière dans la direction latérale (R2), une surface structurée.

10. Luminaire selon l'une des revendications précédentes,
dans lequel la première surface de sortie de lumière (5) est plane en première approximation et de préférence perpendiculaire à la direction vers l'avant (R1).

11. Luminaire selon l'une des revendications précédentes,
dans lequel la première surface de sortie de lumière (5) présente une surface structurée pour la déviation de la première partie de la lumière, par exemple sous la forme de micro-prismes.

12. Luminaire selon l'une des revendications précédentes,
dans lequel l'élément optique est constitué d'une matière plastique transparente, par exemple de PMMA ou de PC.
